# EUROPÄISCHE PATENTSCHRIFT

(11) **EP 2 415 242 B1**
(45) Veröffentlichungstag und Bekanntmachung des Hinweises auf die Patenterteilung: **08.05.2019**
(21) Anmeldenummer: 10709828.7
(22) Anmeldetag: 15.03.2010
(51) Int. Cl.: H04L 29/14, H04L 29/08, H04L 12/407, H04L 12/40, H04W 84/18

(54) **DATENSICHERHEIT FÜR DIE KOMMUNIKATION MIT GLEICHGESTELLTEN TEILNEHMERN**
DATA SECURITY FOR COMMUNICATION BY COEQUAL PARTICIPANTS
SÉCURITÉ DES DONNÉES POUR LA COMMUNICATION AVEC DES DISPOSITIFS UTILISATEURS HOMOLOGUES

(30) Priorität: 03.04.2009 DE 102009002190
(43) Veröffentlichungstag der Anmeldung: 08.02.2012
(73) Patentinhaber: Continental Teves AG & Co. OHG, 60488 Frankfurt am Main (DE)
(72) Erfinder: STÄHLIN, Ulrich, 65670 Eschborn (DE); GEE, Robert, Lake Barrington 60010 (US); MENZEL, Marc, 35096 Weimar (Lahn) (DE)
(86) Internationale Anmeldenummer: PCT/EP2010/053315
(87) Internationale Veröffentlichungsnummer: WO 2010/112327

(56) Entgegenhaltungen:
- DE-A1- 19 620 137
- DE-A1-102006 059 378
- US-A1- 2006 120 289

## Beschreibung

### Gebiet der Erfindung

Die Erfindung betrifft die Kommunikation zwischen verschiedenen Teilnehmern. Insbesondere betrifft die Erfindung zwei Kommunikationseinrichtungen zur Kommunikation mit gleichgestellten Teilnehmern, ein Kommunikationsnetz mit mehreren solchen Kommunikationseinrichtungen, ein Fahrzeug mit einer derartigen Kommunikationseinrichtung, ein Verfahren zur Kommunikation mit einem gleichgestellten Teilnehmer, ein Programmelement und ein computerlesbares Medium.

### Technologischer Hintergrund

Fahrzeug-zu-Fahrzeug Kommunikation und Fahrzeug-zu-Infrastruktur Kommunikation (auch C2X oder Fahrzeug-zu-X Kommunikation genannt) über Dedicated Short Range Communication (DSRC), beispielsweise mittels WLAN 802.11p, oder über zellulären Funk, beispielsweise mittels GPRS, UMTS, LTE, wird verwendet, um Botschaften zwischen benachbarten Fahrzeugen oder einer Infrastruktur und einem Fahrzeug zu übermitteln. Zur Authentifizierung können Zertifikate, z.B. zeitliche begrenzte Zertifikate verwendet werden.

In der Kommunikationsnetzwerktechnik ist das Token Ring Verfahren bekannt, welches in der Spezifikation IEEE 802.5 festgelegt ist. Bei der Fahrzeug-zu-X Kommunikation gibt es aus sicherheitstechnischer Sicht mehrere Ziele. Hierbei handelt es sich beispielsweise um die Wahrung der Anonymität des Senders (der Sender ist nicht nachzuverfolgen, zu "tracken"), Authentifizierung eines Senders (ein Sender kann beweisen, dass er vertrauenswürdig ist), und Schutz gegen Informations-Verfälschung oder Informations-Manipulation.

### Zusammenfassung der Erfindung

Es ist eine Aufgabe der Erfindung, ein reines Fahrzeug-zu-Fahrzeug Kommunikationssystem (C2C-System) ohne Infrastruktureinheiten zu ermöglichen, welches ein hohes Maß an Datensicherheit bietet.

Es sind zwei Kommunikationseinrichtungen ein Kommunikationsnetz, ein Fahrzeug, ein Verfahren, ein computerlesbares Medium und ein Programmelement gemäß den Merkmalen der unabhängigen Ansprüche angegeben. Weiterbildungen der Erfindung ergeben sich aus den Unteransprüchen.

Die im Folgenden beschriebenen Merkmale lassen sich miteinander kombinieren. Insbesondere können Merkmale, die beispielsweise im Folgenden im Hinblick auf die Kommunikationseinrichtung beschrieben werden, auch als Verfahrensschritte implementiert werden, und umgekehrt.

Es ist zu beachten, dass, wenn im Folgenden von einem Fahrzeug die Rede ist, hierunter ein Straßenfahrzeug, wie Auto, Lastkraftwagen oder Bus, ein Schienenfahrzeug, ein Wasserfahrzeug oder ein Luftfahrzeug, wie Helikopter und Flugzeug, zu verstehen ist.

Gemäß einem Ausführungsbeispiel der Erfindung ist eine Kommunikationseinrichtung zur Kommunikation mit einem gleichgestellten Teilnehmer angegeben, welcher eine Kommunikationseinheit und eine Steuereinheit aufweist. Die Kommunikationseinheit ist zum Empfang einer Botschaft von einem benachbarten Teilnehmer ausgeführt. Die Steuereinheit ist zur Überprüfung, ob die empfangene Botschaft einer bestimmten Regel entspricht, und zum Triggern der Abschaltung des Senders (101, 104), wenn über einen längeren Zeitraum ein fehlerhaftes Verhalten von dem benachbarten Fahrzeug erkannt wird.

Eine zentrale Infrastruktur, die beispielsweise zeitlich befristete Zertifikate verteilt, ist hierfür nicht notwendig. Verhält sich ein Teilnehmer nicht regelkonform, so wäre es in dem letztgenannten Fall so, dass er beispielsweise keine weiteren Zertifikate mehr erhält, mit denen er seine Informationen "unterschreiben" kann.

Erfindungsgemäß ist es so, dass, falls sich ein Teilnehmer nicht regelkonform verhält, die Kommunikationseinrichtung eines benachbarten Teilnehmers oder sogar der Teilnehmer selber dies feststellen kann, da geprüft wird, ob empfangene Botschaften einer bestimmten oder mehreren bestimmten Regeln entsprechen. Beispielsweise kann überprüft werden, ob die Gesamtlänge der Botschaft korrekt ist. Ist dies nicht der Fall, deutet dies darauf hin, dass der Sender nicht regelkonform handelt. In diesem Fall wird ein Abschaltesignal an den Sender (bzw. einem damit zusammenhängenden Empfänger) geschickt. Auch kann überprüft werden, ob die Anzahl der empfangenen Datenpakete pro Zeiteinheit regelkonform ist. Werden zu viele Datenpakete pro Zeiteinheit empfangen, kann dies darauf hindeuten, dass die eigene Kommunikationseinrichtung einen defekten Empfangszweig aufweist, in welchem Fall dieser Empfangszweig beispielsweise abgeschaltet werden kann.

Eine zentrale Sendestation in Form eines Servers oder einer Infrastruktur ist hierfür nicht erforderlich. Vielmehr können die erfindungsgemäßen Kommunikationseinrichtungen gleichberechtigt miteinander kommunizieren und einander oder sich selber überprüfen, ohne dass ein Eingriff von außen notwendig ist. Somit handelt es sich um eine reine C2C-Lösung.

Eine Grundannahme besteht darin, dass ein Fahrzeug im System immer mit falschen, gestörten oder anderweitig inkorrekten Botschaften umgehen können muss. Es ist nur schwer möglich, ein 100% sicheres (secure) verbundenes System zu erstellen. Zusätzlich ist es im Regelfall wünschenswert, einen fehlerhaften Teilnehmer des Kommunikationsnetzes abzuschalten, auch falls dieses Abschalten zeitlich begrenzt (temporär) ist, anstelle diesen die Luftschnittstelle weiterhin mit fehlerhaften Botschaften "verschmutzen" zu lassen.

Um diese Abschaltung ohne eine zentrale Kontrolleinheit (einen zentralen "Chef", also eine Infrastruktur, beispielsweise einen Server) im System zu ermöglichen, kann jeder Kommunikationsteilnehmer (Kommunikationseinrichtung) so ausgeführt sein, dass er eine aktive Rolle in der Kommunikation einnehmen kann, so dass eine kooperative Sicherung des Netzes erfolgt.

Die Kommunikationseinrichtung (der C2X-Teilnehmer) kann mit einer gewissen Wahrscheinlichkeit erkennen, welche Botschaften nicht verwertbar bzw. falsch sind, um darauf aufbauend aktiv zu werden. Jede empfangene Botschaft wird darauf überprüft, ob sie den Regeln entspricht und ob die versendeten Daten stimmen können. Bei diesen Regeln kann es sich beispielsweise um die folgenden Regeln handeln:
- Stimmt die Gesamtlänge der Botschaft? Stimmen die Längen der einzelnen Elemente der Botschaft?
- Ist die Botschaft interpretierbar? Das heißt macht die Bitfolge Sinn und kann sie dekodiert werden?
- Stimmt die Checksumme (falls verwendet)?
- Stimmt der Aufbau der Botschaft, das heißt sind die einzelnen Inhalte an der richtigen Stelle?
- Stimmt die Kodierung der Botschaft?
- Bei Verwendung eines Zertifikats zur Authentifizierung: Ist die Botschaft unverändert empfangen worden?
- Passt die relative Position des Senders zur Empfangsreichweite? Beispiel: Bei 500 m Reichweite der Kommunikation kann es nicht sein, dass Botschaften direkt empfangen werden, deren Sendeposition laut Botschaft 2 km entfernt ist.
- Passen Position, Geschwindigkeit, Beschleunigung, Lenkradwinkel, Bremspedalstellung, Gaspedalstellung, Gierrate, ... (jeweils falls vorhanden), also fahrdynamische Größen zueinander? Hierzu sollte der Verlauf mehrerer Botschaften überwacht werden.
- Passen Position, Geschwindigkeit, Beschleunigung, etc. zu den Daten von anderen Fahrzeugen in der Umgebung? Ein Fahrzeug, das hinter einem anderen Fahrzeug fährt, sollte zum Beispiel ungefähr dessen Geschwindigkeit haben.

- Passt die Sendefrequenz zu der erlaubten bzw. erwarteten Sendefrequenz? Sind im Normalfalls 2 Hz Sendefrequenz und im Notfall bis 10 Hz Sendefrequenz vereinbart und sendet ein Teilnehmer mit 5 Hz, obwohl keine Besonderheit und kein Notfall vorliegen, so ist das als Fehler zu werten.
- Passt die empfangene Position bei Berücksichtigung der Positioniergenauigkeit zur Umgebung? Beispiel: Wird eine Position versendet, die sich 50 m über oder unter dem Erdboden befindet, obwohl keine Brücke oder kein Tunnel in der Nähe zu erwarten sind, so ist das als Fehler zu werten.
- Passt eine Aktionsbotschaft (Event-Flag) zu den restlichen Daten? Beispiel: Wird als Botschaft vor einem defekten Fahrzeug gewarnt und bewegt sich dieses über einen längeren Zeitraum mit unterschiedlichen Geschwindigkeiten, so ist das als Fehler zu werten.

Dies ist keine erschöpfende Liste, zeigt aber mehrere Möglichkeiten auf.

Gemäß einem weiteren Ausführungsbeispiel der Erfindung handelt es sich bei der Kommunikationseinrichtung um eine Fahrzeug-Kommunikationseinrichtung eines Fahrzeugs, wobei der benachbarte Teilnehmer eine Kommunikationseinrichtung in einem benachbarten Fahrzeug ist.

Gemäß einem weiteren Ausführungsbeispiel der Erfindung ist der Sender ein Teil der Kommunikationseinheit des benachbarten Fahrzeugs.

Der Sender kann aber auch Teil der fahrzeugeigenen Kommunikationseinheit sein.

In anderen Worten ist also sowohl möglich, dass andere Kommunikationsteilnehmer überwacht werden als auch dass das Kommunikationsgerät sich selbst überwacht.

Gemäß einem weiteren Ausführungsbeispiel der Erfindung ist die Kommunikationseinrichtung zum Übermitteln eines von der Steuereinheit generierten Abschaltbefehls an den Sender zum Triggern der Abschaltung ausgeführt.

Gemäß einem weiteren Ausführungsbeispiel der Erfindung ist die Kommunikationseinrichtung zur Auswertung von durch den Sender empfangenen Abschaltbefehlen und zur Deaktivierung des Senders und/oder eines Empfängers, falls die Auswertung ergibt, dass eine Abschaltung des Senders erforderlich ist, ausgeführt.

In diesem Fall wird also nicht "blind" abgeschaltet, wenn ein entsprechender Abschaltbefehl empfangen wird. Vielmehr werden mehrere solcher Abschaltbefehle, vom gleichen oder von verschiedenen Sendern, gesammelt und ausgewertet und analysiert, so dass dann entschieden werden kann, ob ein Abschalten erforderlich ist.

Gemäß einem weiteren Ausführungsbeispiel der Erfindung ist die Kommunikationseinrichtung zur Abschaltung des Senders auf Ebene eines Kommunikationschips des Senders ausgeführt.

Gemäß einem weiteren Ausführungsbeispiel der Erfindung weist der Kommunikationschip einen Prozessor auf, der in die Hardware des Chips integriert ist, wobei der Prozessor zum Abschalten des Chips ausgeführt ist.

Gemäß einem weiteren Ausführungsbeispiel der Erfindung ist eine Kommunikationseinrichtung angegeben, bei welcher der Sender Teil der Kommunikationseinheit des Teilnehmers (also beispielsweise des eigenen Fahrzeugs) ist.

Gemäß einem weiteren Ausführungsbeispiel der Erfindung ist die Kommunikationseinrichtung zur Selbsterkennung eines Fehlers in einem Empfangskanal des Senders durch Zählen von empfangenen Botschaften bei einer unterschiedlichen Anzahl von gesendeten Datenpaketen pro Zeiteinheit ausgeführt.

Gemäß einem weiteren Ausführungsbeispiel der Erfindung ist die Kommunikationseinrichtung zum Wechseln einer Fahrzeug-Identifikation zu festgelegten Zeitpunkten ausgeführt. Beispielsweise können sämtliche Kommunikationseinrichtungen eines Kommunikationsnetzes ihre Fahrzeug-Identifikation bzw. Teilnehmer-Identifikation zu denselben Zeitpunkten (also synchron) wechseln.

Gemäß einem weiteren Ausführungsbeispiel der Erfindung ist ein Kommunikationsnetz angegeben, welches mehrere der oben und im Folgenden beschriebenen Kommunikationseinrichtungen aufweist.

Gemäß einem weiteren Ausführungsbeispiel der Erfindung ist ein Verfahren zur Kommunikation mit einem gleichgestellten Kommunikationsteilnehmer angegeben, bei dem eine Botschaft von einem benachbarten Teilnehmer empfangen wird und dann überprüft wird, ob die empfangene Botschaft einer bestimmten Regel entspricht. Falls die empfangene Botschaft der bestimmten Regel nicht entspricht, wird eine Abschaltung eines Senders vom Empfänger der Botschaft getriggert. Dieser Sender kann sich beim Empfänger oder bei dem benachbarten Teilnehmer befinden.

Gemäß einem weiteren Ausführungsbeispiel der Erfindung ist ein Programmelement angegeben, das, wenn es auf einem Prozessor einer Kommunikationseinrichtung ausgeführt wird, den Prozessor anleitet, die oben und im Folgenden beschriebenen Verfahrensschritte durchzuführen.

Dabei kann das Computerprogrammelement zum Beispiel Teil einer Software sein, die auf einem Prozessor der Kommunikationseinrichtung gespeichert ist. Der Prozessor kann dabei ebenso Gegenstand der Erfindung sein. Weiterhin umfasst dieses Ausführungsbeispiel der Erfindung ein Computerprogrammelement, welches schon von Anfang an die Erfindung verwendet, so wie auch ein Computerprogrammelement, welches durch eine Aktualisierung (update) ein bestehendes Programm zur Verwendung der Erfindung veranlasst.

Gemäß einem weiteren Ausführungsbeispiel der Erfindung ist ein computerlesbares Medium angegeben, auf dem ein Programmelement gespeichert ist, das, wenn es auf einem Prozessor einer Kommunikationseinrichtung ausgeführt wird, den Prozessor anleitet, die oben und im Folgenden beschriebenen Verfahrensschritte durchzuführen.

Im Folgenden werden mit Verweis auf die Figuren Ausführungsbeispiele der Erfindung beschrieben.

### Kurze Beschreibung der Figuren

Fig. 1 zeigt ein Kommunikationsnetz mit mehreren Kommunikationseinrichtungen gemäß einem Ausführungsbeispiel der Erfindung.
Fig. 2 zeigt einen Kommunikationschip einer Kommunikationseinrichtung gemäß einem Ausführungsbeispiel der Erfindung.
Fig. 3 zeigt zwei Fahrzeuge mit Kommunikationseinrichtungen gemäß einem Ausführungsbeispiel der Erfindung.
Fig. 4 zeigt ein Flussdiagramm eines Verfahrens gemäß einem Ausführungsbeispiel der Erfindung.

### Detaillierte Beschreibung von Ausführungsbeispielen

Die dargestellten Figuren sind schematisch und nicht maßstäblich. In den Figuren werden für die gleichen oder ähnlichen Elemente die gleichen Bezugsziffern verwendet.

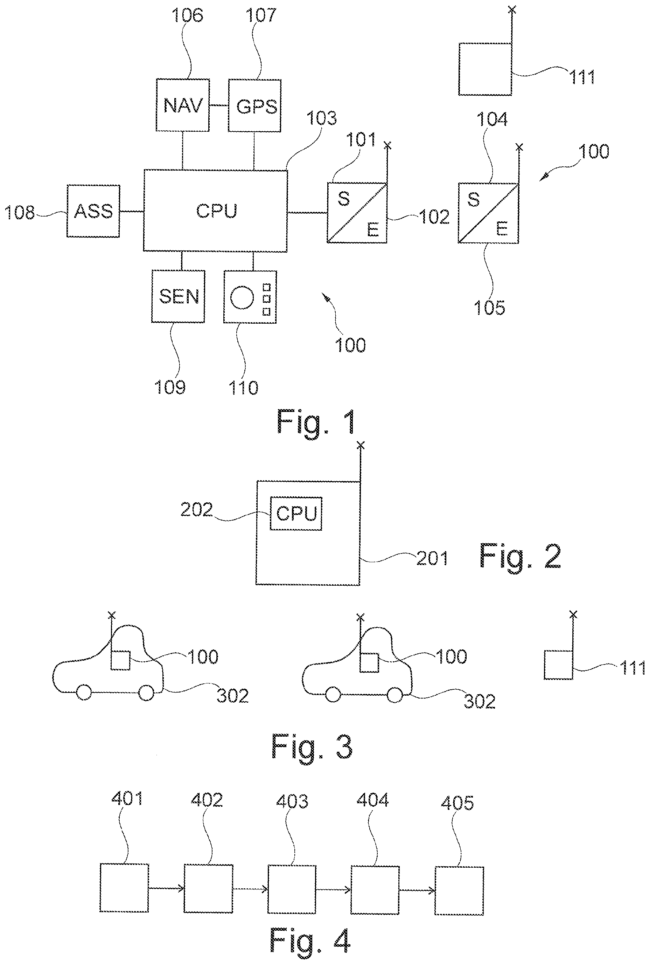

Fig. 1 zeigt ein Kommunikationsnetz mit zwei Kommunikationseinrichtungen 100 sowie einer Infrastruktureinrichtung 111, beispielsweise einem Server. Die Infrastruktureinrichtung 111 kann gemäß diesem Ausführungsbeispiel an der Kommunikation teilnehmen. Diese Teilnahme ist aber nicht erforderlich.

Die linke Kommunikationseinrichtung 100 weist eine Kommunikationseinheit mit einem Sender 101 und einem Empfänger 102 auf. Weiterhin ist eine Steuereinheit 103 vorgesehen, die kommunizierfähig mit der Kommunikationseinheit 101, 102 gekoppelt ist.

Die in Fig. 1 gezeigten Kommunikationseinrichtungen 100 können beispielsweise in einem Fahrzeug installiert sein. In diesem Fall sei darauf hingewiesen, dass der Datenaustausch zwischen einzelnen Komponenten 101, 102, 106 bis 110 und der Steuereinheit 103 drahtgebunden und/oder (in manchen Ausführungsbeispielen) drahtlos erfolgt.

An die Steuereinheit 103 sind weiterhin eine Navigationseinheit 106, eine Satelliten-Positionsbestimmungseinheit 107, die beispielsweise auf GPS-Signalen beruht, ein Fahrerassistenzsystem 108, eine Fahrzeugsensorik und/oder Umfeldsensorik 109 und eine Mensch-Maschine-Schnittstelle 110 angeschlossen.

Weiterhin sei darauf hingewiesen, dass im Kontext der vorliegenden Erfindung GPS stellvertretend für sämtliche Globale Navigationssatellitensysteme (GNSS) steht, wie z.B. GPS, Galileo, GLONASS (Russland), Compass (China), oder IRNSS (Indien).

Die zweite Kommunikationseinrichtung weist ebenfalls eine Sendeeinheit 104 und eine Empfangseinheit 105 auf.

Die entsprechende Steuereinheit (nicht abgebildet) ist beispielsweise in der Sendeeinheit und/oder der Empfangseinheit integriert.

Die Validierung der empfangenen Botschaften dient einerseits der eigenen Fahrzeugsicherheit, da nur solche Botschaften zur weiteren Analyse verwendet werden, die auch als "richtig" eingestuft werden. Andererseits können die Validierungsergebnisse auch zu einer kooperativen Überwachung aller Teilnehmer verwendet werden.

Diese kooperative Überwachung lehnt sich an IBM Token Ring an. So kann ein Kommunikationsteilnehmer A einen anderen Teilnehmer B abschalten, falls dieser fehlerhaft ist. Dazu wird von Teilnehmer A eine Botschaft an Teilnehmer B gesendet, die diesen Teilnehmer B dazu veranlasst, sich abzuschalten. Die Abschaltung erfolgt dabei auf sehr niedrigen Schichten des Kommunikationsstapels (Kommunikations-Stacks), also zum Beispiel auf dem MAC-Layer bzw. dem Data Link Layer. Dadurch können Probleme mit einem Kommunikationsteilnehmer ohne eine zentrale Instanz erkannt und behoben werden.

Das Dokument DE102006059378 beschreibt ein erster Knoten, der ein XOFF Bit in einem Paket setzen kann, so dass in einem zweitem Knoten, der das Paket empfängt, die Übertragung von Daten zum ersten Knoten auf dem jeweiligen Datenkanal gestoppt wird.

Im Unterschied zu Token Ring gibt es in einer drahtlosen Kommunikationsverbindung prinzipiell eine unendliche Anzahl an Zuhörern (bei Token Ring ist das per Definition immer nur einer). Zusätzlich kann es bei einer kabelgebundenen Verbindung einen physikalischen Mechanismus (zum Beispiel eine dedizierte Verbindung) für die Fehlerbehandlung geben, was bei drahtlosen Kommunikationstechniken nicht möglich ist. Auch ist bei einer drahtgebundenen Kommunikation immer bekannt, wer den Abschaltbefehl versendet hat, was bei einer drahtlosen Kommunikation durch einen zusätzlichen Mechanismus sichergestellt werden muss.

Bei beiden Lösungen (drahtgebunden oder drahtlos) ist es von Vorteil, wenn der Abschaltmechanismus auf Kommunikationschipebene erfolgt. Dadurch ist die Methode sehr unempfindlich gegen fehlerhafte Anwendungen.

Wird nun bei C2X von Fahrzeug A über einen längeren Zeitraum (zum Beispiel 1 Minute) ein fehlerhaftes Verhalten von Fahrzeug B erkannt (Methoden siehe oben), so wird eine Botschaft an Fahrzeug B versendet, die diesem signalisiert, dass es fehlerhaft funktioniert. Zusätzlich können ab diesem Zeitpunkt die Botschaften von Fahrzeug B durch Fahrzeug A über einen bestimmten Zeitraum (zum Beispiel 1 Stunde) ignoriert werden. Optional können die Identifikation (ID) oder ein anderes Erkennungsmuster und/oder die Position des Fahrzeugs B im Fahrzeug A gespeichert werden. So kann später ein Techniker nachvollziehen, was die Einheit in Fahrzeug A gemacht hat.

Die Kommunikationseinheit in Fahrzeug B prüft nun die empfangenen Abschaltbotschaften auf ein Muster. Sobald innerhalb eines bestimmten Zeitraums (zum Beispiel 1 Stunde) Abschaltbotschaften von einer Mindestanzahl von anderen Fahrzeugen (zum Beispiel 5 anderen Fahrzeugen) empfangen werden, so hört das Fahrzeug B auf zu senden und empfängt nur noch. Zusätzlich werden wie oben beschrieben optional die Daten, die zum Abschalten geführt haben, aufgezeichnet, damit sie einem Techniker zur Verfügung gestellt werden können.

Empfängt die Kommunikationseinheit im Fahrzeug B weiterhin Abschaltbotschaften (zum Beispiel wiederum von fünf verschiedenen Fahrzeugen), so wird zusätzlich auch der Empfänger deaktiviert. Die Änderung des Kommunikationsmodus (nur Empfangen oder komplette Abschaltung) wird den Anwendungen im Fahrzeug sowie ggf. dem Fahrer signalisiert.

Nach einer festgelegten Zeit (zum Beispiel 1 Stunde) aktiviert sich das Kommunikationsmodul (Kommunikationseinrichtung) erneut. Dadurch wird erschwert, dass (eventuell absichtliche) fehlerhafte Abschaltbotschaften zu einer permanenten Deaktivierung des Kommunikationsmoduls führen können. Das Kommunikationsmodul merkt sich, wie oft es abgeschaltet wurde. Wird nun innerhalb eines vorgegebenen Zeitraums (zum Beispiel 8 Stunden) erneut ein Abschalten notwendig, so wird diesmal länger abgeschaltet. Erreicht der Abschaltzähler einen Maximalwert, so wird die Kommunikationseinheit dauerhaft deaktiviert und eine Service-Information an den Fahrer (zum Beispiel durch eine Signalleuchte) und eventuell automatisch an den Fahrzeugservice übermittelt.

Das beschriebene Verfahren zur Abschaltung kann im Kommunikationschip 201 (siehe Fig. 2) erfolgen. Die Erkennung des fehlerhaften Sendens jedoch kann auch auf Applikationsebene erfolgen.

Werden mehrere Kanäle verwendet, so kann das Verfahren auf jeden der Kanäle einzeln angewendet werden oder aber über die Gesamtheit der Kanäle betrachtet werden. Bei der Verwendung mehrerer Transceiver kann das Verfahren ebenfalls für jeden Transceiver getrennt oder aber für die Gesamtheit der Transceiver verwendet werden.

Die beschriebenen Zeiten beziehen sich dabei beispielsweise auf die tatsächliche "Fahrzeit" beim Erkennen der Abschaltbotschaften und die "reale" Zeit bei der Deaktivierung. In anderen Worten wird beim Erkennen der Abschaltbotschaften nicht die Zeit mitgerechnet, die das Fahrzeug ausgeschaltet ist, wobei die Deaktivierung auch in einem Zeitraum erfolgen kann, während dem das Fahrzeug in der Garage steht.

Das beschriebene Verfahren ist sehr robust. Beispielsweise bedeutet dies:
- Fehlerhafte oder "boshafte" Module können aus dem Netzwerk entfernt werden. Dies geschieht jedoch nur dann, wenn mehrere Netzwerkteilnehmer "dafür stimmen".
- Fehlerhafte Abschaltbotschaften können toleriert werden.
- Boshaftes Abschalten erfordert einen hohen Aufwand. Beispielsweise muss das abzuschaltende Fahrzeug über einen längeren Zeitraum verfolgt werden.
- Das Abschalten erfolgt auf niedrigen Ebenen des Kommunikationsstapels (beispielsweise innerhalb der Hardware) und ist daher schwer zu knacken.
- Durch das Mitloggen des Abschaltvorgangs sowohl im Sender als auch im Empfänger ist es möglich, die Situation zu rekonstruieren und damit können zum Beispiel juristische Untersuchungen unterstützt werden.
- Durch das Abschalten der Kommunikationseinheit wird die Sicherheit des Fahrzeugs erhöht, da es Hackern erschwert wird, über fehlerhafte Botschaften in das System einzudringen. Gleichzeitig sind jedoch die anderen Sicherheitssysteme von diesem Abschalten nicht betroffen und somit bleibt die Gesamtsicherheit des Fahrzeugs erhalten.

Zur Reaktivierung einer Kommunikationseinheit (Kommunikationseinrichtung) muss der Techniker zum Beispiel eine PUK wie bei einer SIM-Karte verwenden. Wie bei einer SIM-Karte kann sich das System permanent deaktivieren, falls jemand versucht, dieses Verfahren zu knacken oder unerlaubt in das System einzudringen. Jeder OEM kann dabei eine einheitliche PUK für seine Kommunikationssysteme verwenden, um die Arbeit zu erleichtern. Jede Reaktivierung mittels PUK wird festgehalten (erfasst), um diese Information zum Beispiel für Garantieansprüche zurückverfolgen zu können.

Ist es nicht möglich, den Abschaltalgorithmus in die Hardware des Kommunikationschips 201 zu integrieren, so bietet es sich zumindest an, einen Prozessor 202 in die Chiphardware zu integrieren. Dieser Prozessor kann sich dann aus einem nichtschreibbaren Speicher (zum Beispiel ROM) das notwendige Programm beim Start des Fahrzeugs laden. Es ist jedoch notwendig, dass der Prozessor überprüfen kann, ob der Abschaltalgorithmus im geladenen Programmcode vorhanden ist. Dies erfolgt beispielsweise über entsprechende Testroutinen im geladenen Code. Mit dieser Lösung kann auf einen sicheren Speicher und damit einen sicheren Prozessor verzichtet werden.

Um zu verhindern, dass Systeme, bei denen der Empfangspfad gestört ist, beispielsweise also Systeme, die übermäßig viele Datenpakete aussenden oder die Datenpakete mit zu hoher Sendeleistung aussenden oder Systeme, die übermäßig viel Bandbreite verbrauchen, sollten Systeme, die feststellen, dass sie über einen längeren Zeitraum keine bzw. nur sehr leistungsarme Daten empfangen haben, ihre Ausstrahlung auf eine Minimalzahl an Ausstrahlungen reduzieren. Zum Beispiel können sogenannte Netzwerk-Beacons mit maximal möglichem zeitlichen Abstand versendet werden und nur noch Ereignisinformationen der höchsten Dringlichkeitsstufe versendet werden.

Ändert sich dann die Anzahl bzw. die Stärke der empfangenen Daten, so kann das System erkennen, dass es fehlerhaft ist und von selbst abschalten bzw. durch die Abschaltbotschaft der anderen Fahrzeuge abgeschaltet werden. Ansonsten kann es davon ausgehen, dass die geringe Anzahl der Datenpakete bzw. die geringe Stärke der Daten auf die Umgebungsbedingungen des Fahrzeugs zurückzuführen sind.

Die IDs der Fahrzeuge (Fahrzeugidentifikationen) werden regelmäßig und bei allen Fahrzeugen gleichzeitig gewechselt. Um auch hier ohne Infrastruktur auszukommen, bietet es sich an, das Fahrzeug gleich zu Beginn mit einem zertifizierten Satz an IDs zu versorgen, die das Fahrzeugleben lang (oder zumindest lange genug, so dass sie nicht zu oft "nachgeladen" werden müssen) ausreichen, um einen sicheren Betrieb der Kommunikationseinrichtung zu gewährleisten. Diese IDs können eindeutig sein, so dass es Behörden möglich wird, falls notwendig, die Identität des Senders (also des Fahrzeugs) zu rekonstruieren. Dies ist beispielsweise allerdings nur dann möglich, wenn der Behörde die ID-Liste vorliegt. Ansonsten sollten die IDs so beschaffen sein, dass ohne Kenntnis der kompletten ID-Liste eines Fahrzeugs kein Rückschluss auf die Identität des Fahrzeugs gezogen werden kann und die Privatsphäre geschützt bleibt.

Ein weiterer wichtiger Aspekt eines Ausführungsbeispiels der Erfindung ist die Authentifizierung von speziellen Teilnehmern, wie zum Beispiel Einsatzfahrzeugen. Da es auch hier keine 100%ige Sicherheit gibt, ist es wichtig, dass diese Fahrzeuge erkannt werden können, so dass sie, falls sie sich fälschlicherweise als ein spezieller Teilnehmer ausgegeben haben, verfolgt werden können.

Die Authentifizierung sollte für diesen speziellen Teilnehmer mit einem asymmetrischen Verfahren erfolgen. Dabei kann jedes Fahrzeug einen oder mehrere öffentliche Schlüssel (public keys) besitzen. Die speziellen Fahrzeuge versenden private Schlüssel, um ihre kompletten Botschaften zu verschlüsseln. In der Botschaft sollten sich dabei auf jeden Fall die aktuelle Sendezeit und/oder die Position des Senders befinden, damit es nicht einfach möglich ist, Botschaften 1:1 zu kopieren.

Wird eine alte Zeit oder eine unpassende Position erkannt, so wird die Botschaft vom Empfänger verworfen. Die öffentlichen Schlüssel können analog den IDs zeitlich begrenzt sein und zu einem festen Zeitpunkt gewechselt werden. Damit werden geklaute private Schlüssel spätestens zu diesem Wechselzeitpunkt nutzlos.

Ebenso ist es möglich, dass jedes Fahrzeug einen festen Satz an öffentlichen Schlüsseln bekommt, zum Beispiel 100 Stück. Zu Beginn werden nur private Schlüssel verwendet, die mit dem ersten öffentlichen Schlüssel entschlüsselt werden können. Wurde dieser private Schlüssel geknackt, so wird auf den zweiten privaten Schlüssel gewechselt, usw. Um nun zu verhindern, dass ein Fahrzeug auch weiterhin die alten Schlüssel akzeptiert, werden öffentliche Schlüssel niedrigerer Nummer als "verbraucht" markiert, sobald eine Botschaft empfangen, die zu einem höheren öffentlichen Schlüssel passt.

Das beschriebene Verfahren kann generell für alle Kommunikationstechniken eingesetzt werden, also zum Beispiel DSRC auf Basis von 802.11p, C2X über RKE, UMTS, LTE, WiMAX, IEEE 802.11a/b/g/n, Bluetooth, ZigBee, ...

Eine Infrastruktur für die Gewährleistung der Datensicherheit bei C2C Kommunikation ist nicht notwendig.

Fig. 3 zeigt zwei Fahrzeuge 301, 302, welche jeweils eine Kommunikationseinrichtung 100 aufweisen. Die Kommunikationseinrichtung kann, muss aber nicht, fest in dem Fahrzeug installiert sein. Es kann sich auch um eine mobile Kommunikationseinrichtung handeln. Auch ist es möglich, dass beispielsweise Sende/Empfangseinheit 101, 102 der Kommunikationseinrichtung mobil sind (beispielsweise ein Mobiltelefon) und die Steuereinheit mit den darin angeschlossenen Komponenten fest im Fahrzeug verbaut ist.

Fig. 4 zeigt ein Flussdiagramm eines Verfahrens gemäß einem Ausführungsbeispiel der Erfindung. In Schritt 401 strahlt eine benachbarte Kommunikationseinrichtung eine Botschaft aus, die in Schritt 402 von der eigenen Kommunikationseinrichtung empfangen wird. Die Steuereinheit der eigenen Kommunikationseinrichtung überprüft in Schritt 403, ob die empfangene Botschaft allen festgelegten Regeln entspricht oder ob eine der Regeln verletzt wird. Ist es der Fall, dass eine oder mehrere der Regeln verletzt werden, kann von der Steuereinheit entschieden werden, dass der Sender der Botschaft eine Abschaltnachricht erhalten soll. Diese Abschaltnachricht wird in Schritt 404 von der eigenen Kommunikationseinrichtung abgestrahlt und ist an den Sender der ursprünglichen Botschaft adressiert.

In Schritt 405 analysiert der Sender diese und andere empfangene Abschaltnachrichten und schaltet sich daraufhin selbstständig für einen vorbestimmten Zeitraum (beispielsweise 1 Stunde) ab.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Kommunikationseinrichtung eines Fahrzeuges zur Fahrzeug-zu-Fahrzeug Kommunikation mit einem gleichgestellten Teilnehmer, die Kommunikationseinrichtung aufweisend:
- eine Kommunikationseinheit (101, 102) zum Empfang einer Botschaft von einer Kommunikationseinrichtung in einem benachbarten Fahrzeug mittels Fahrzeug-zu-Fahrzeug Kommunikation,
wobei die Kommunikationseinrichtung ausgeführt ist zum Übermitteln eines von einer Steuereinheit (103) generierten Abschaltbefehls an einen Sender (101, 104) der Kommunikationseinheit des benachbarten Fahrzeugs zum Triggern einer Abschaltung;
**dadurch gekennzeichnet, dass** die Kommunikationseinrichtung aufweist:
eine Steuereinheit (103) zur Überprüfung, ob die empfangene Botschaft einer bestimmten Regel entspricht zur Feststellung eines nicht regelkonformen Verhaltens eines Teilnehmers der Fahrzeug-zu-Fahrzeug Kommunikation, und zum Triggern der Abschaltung des Senders (101, 104), wenn über einen längeren Zeitraum ein fehlerhaftes Verhalten von dem benachbarten Fahrzeug erkannt wird.

2. Kommunikationseinrichtung eines Fahrzeuges zur Fahrzeug-zu-Fahrzeug Kommunikation, aufweisend:
eine Kommunikationseinheit (101, 102) zum Senden einer Botschaft mittels Fahrzeug-zu-Fahrzeug Kommunikation und zum Empfang einer von der Steuereinheit eines benachbarten Fahrzeuges generierten Abschaltbefehls;
wobei die Kommunikationseinrichtung ausgeführt ist zur Auswertung von den empfangenen Abschaltbefehlen und zur Deaktivierung des Senders (101) und/oder eines Empfängers (102) der Kommunikationseinheit, falls die Auswertung ergibt, dass eine Abschaltung des Senders erforderlich ist, wobei die Kommunikationseinheit ausgeführt ist um die empfangenen Abschaltbefehle auf ein Muster zu prüfen und um den Sender (101) zu deaktivieren, sobald innerhalb eines bestimmten Zeitraums Abschaltbefehlen von einer Mindestanzahl von anderen Fahrzeugen empfangen werden.

3. Kommunikationseinrichtung nach Anspruch 2, wobei die Kommunikationseinheit ausgeführt ist um den Empfänger der Kommunikationseinheit zu deaktivieren, sobald die Kommunikationseinheit weiterhin Abschaltbotschaften empfängt.

4. Kommunikationseinrichtung nach einem der vorhergehenden Ansprüche 2-3, wobei die Kommunikationseinrichtung zur Abschaltung des Senders (101, 104) auf Ebene eines Kommunikationschips (201) des Senders (101, 104) ausgeführt ist.

5. Kommunikationseinrichtung nach Anspruch 4, wobei der Kommunikationschip (201) einen Prozessor (202) aufweist, der in die Hardware des Chips integriert ist; wobei der Prozessor zum Abschalten des Chips ausgeführt ist.

6. Fahrzeug mit einer Kommunikationseinrichtung nach Anspruch 1.

7. Fahrzeug mit einer Kommunikationseinrichtung nach Anspruch 2.

8. Verfahren zur Fahrzeug-zu-Fahrzeug Kommunikation mit einem gleichgestellten Teilnehmer, das Verfahren aufweisend den Schritt:
Empfang einer Botschaft von einem benachbarten Teilnehmer,
**dadurch gekennzeichnet, dass** das Verfahren die Schritte aufweist:
Überprüfung, ob die empfangene Botschaft einer bestimmten Regel entspricht;
Feststellung eines nicht regelkonformen Verhaltens eines Teilnehmers der Fahrzeug-zu-Fahrzeug Kommunikation;
Triggern einer Abschaltung eines Senders (101, 104) der benachbarten Teilnehmer, falls die empfangene Botschaft der bestimmten Regel nicht entspricht, wobei ein Abschaltbefehl an den Sender zum Triggern der Abschaltung übermittelt wird; Prüfen der empfangenen Abschaltbefehle auf ein Muster;
Deaktivierung des Senders (101) der benachbarten Teilnehmer, sobald innerhalb eines bestimmten Zeitraums Abschaltbefehlen von einer Mindestanzahl von anderen Fahrzeugen empfangen werden.

9. Programmelement, das, wenn es auf einem Prozessor einer Kommunikationseinrichtung zur Fahrzeug-zu-Fahrzeug Kommunikation ausgeführt wird, den Prozessor anleitet, die Schritte nach Anspruch 8 durchzuführen.

10. Computerlesbares Medium, auf dem ein Programmelement gespeichert ist, das, wenn es auf einem Prozessor einer Kommunikationseinrichtung zur Fahrzeug-zu-Fahrzeug Kommunikation ausgeführt wird, den Prozessor anleitet, die Schritte nach Anspruch 8 durchzuführen.

## Claims

1. Communication device of a vehicle for vehicle-to-vehicle communication with a coequal subscriber, said communication device having:
- a communication unit (101, 102) for receiving a message from a communication device in an adjacent vehicle by means of vehicle-to-vehicle communication,
wherein the communication device is designed to transmit a disconnection command generated by a control unit (103) to a transmitter (101, 104) of the communication unit of the adjacent vehicle for the purpose of triggering a disconnection;
**characterized in that** the communication device has:
a control unit (103) for checking whether the received message complies with a particular rule for establishing a non-rule-compliant behavior of a subscriber of the vehicle-to-vehicle communication, and for triggering disconnection of the transmitter (101, 104) if an incorrect behavior by the adjacent vehicle is recognized over an extended period of time.

2. Communication device of a vehicle for vehicle-to-vehicle communication, having:
a communication unit (101, 102) for sending a message by means of vehicle-to-vehicle communication and for receiving a disconnection command generated by the control unit of an adjacent vehicle;
wherein the communication device is designed to evaluate the disconnection commands received and to deactivate the transmitter (101) and/or a receiver (102) of the communication unit if the result of the evaluation is that it is necessary to disconnect the transmitter, wherein the communication unit is designed to check the received disconnection commands for a pattern and to deactivate the transmitter (101) as soon as disconnection commands are received from a minimum number of other vehicles within a particular period.

3. Communication device according to Claim 2, wherein the communication unit is designed to deactivate the receiver of the communication unit as soon as the communication unit continues to receive disconnection messages.

4. Communication device according to one of the preceding Claims 2-3, wherein the communication device is designed to disconnect the transmitter (101, 104) at the level of a communication chip (201) in the transmitter (101, 104).

5. Communication device according to Claim 4, wherein the communication chip (201) has a processor (202) which is integrated in the hardware of the chip; wherein the processor is designed to disconnect the chip.

6. Vehicle having a communication device according to Claim 1.

7. Vehicle having a communication device according to Claim 2.

8. Method for vehicle-to-vehicle communication with a coequal subscriber, said method having the following step:
receiving a message from an adjacent subscriber,
**characterized in that** the method has the following steps:
checking whether the received message complies with a particular rule;
establishing a non-rule-compliant behavior of a subscriber of the vehicle-to-vehicle communication;
triggering disconnection of a transmitter (101, 104) of the adjacent subscriber if the received message does not comply with the particular rule, wherein a disconnection command is transmitted to the transmitter for the purpose of triggering the disconnection;
checking the received disconnection commands for a pattern;
deactivating the transmitter (101) of the adjacent subscribers as soon as disconnection commands are received from a minimum number of other vehicles within a particular period.

9. Program element which, when executed on a processor in a communication device for vehicle-to-vehicle communication, instructs the processor to perform the steps according to Claim 8.

10. Computer-readable medium which stores a program element which, when executed on a processor in a communication device for vehicle-to-vehicle communication, instructs the processor to perform the steps according to Claim 8.

## Revendications

1. Système de communication d'un véhicule, destiné à la communication de véhicule-à-véhicule avec un abonné assimilé, le système de communication comportant :
- une unité de communication (101, 102), destinée à réceptionner un message de la part d'un système de communication dans un véhicule voisin, par communication de véhicule-à-véhicule,
le système de communication étant réalisé pour transmettre une instruction de mise à l'arrêt générée par une unité de commande (103) à un émetteur (101, 104) de l'unité de communication du véhicule voisin, pour déclencher une mise à l'arrêt ; **caractérisé en ce que** le système de communication comporte :
une unité de commande (103), destinée à vérifier si le message réceptionné correspond à une règle déterminée, pour la constatation d'un comportement non réglementaire d'un abonné à la communication de véhicule-à-véhicule et pour déclencher la mise à l'arrêt de l'émetteur (101, 104), si sur une période prolongée, un comportement incorrect du véhicule voisin est identifié.

2. Système de communication d'un véhicule pour la communication de véhicule-à-véhicule, comportant :
une unité de communication (101, 102) destinée à envoyer un message par communication de véhicule-à-véhicule et à réceptionner une instruction de mise à l'arrêt générée par l'unité de commande d'un véhicule voisin ;
le système de communication étant réalisé pour évaluer les instructions de mise à l'arrêt réceptionnées et pour désactiver l'émetteur (101) et/ou un récepteur (102) de l'unité de communication, s'il résulte de l'évaluation qu'une mise à l'arrêt de l'émetteur est requise, l'unité de communication étant réalisée pour vérifier les instructions de mise à l'arrêt réceptionnées par rapport à un modèle et pour désactiver l'émetteur (101) dès que dans une période déterminée, des instructions de mise à l'arrêt sont réceptionnées par un nombre minimum d'autres véhicules.

3. Système de communication selon la revendication 2, l'unité de communication étant réalisée pour désactiver le récepteur de l'unité de communication dès que l'unité de communication continue à réceptionner des messages de mise à l'arrêt.

4. Système de communication selon l'une quelconque des revendications précédentes 2 à 3, le système de communication étant réalisé pour mettre à l'arrêt l'émetteur (101, 104) au niveau d'une puce de communication (201) de l'émetteur (101, 104) .

5. Système de communication selon la revendication 4, la puce de communication (201) comportant un processeur (202) qui est intégré dans le matériel de la puce ; le processeur étant réalisé pour mettre à l'arrêt la puce.

6. Véhicule, pourvu d'un système de communication selon la revendication 1.

7. Véhicule, pourvu d'un système de communication selon la revendication 2.

8. Procédé, destiné à la communication de véhicule-à-véhicule avec un abonné assimilé, le procédé comportant l'étape consistant à :
réceptionner un message de la part d'un abonné voisin, **caractérisé en ce que** le procédé comporte les étapes consistant à :
vérifier si le message réceptionné correspond à une règle déterminée ;
constater un comportement non réglementaire d'un abonné à la communication de véhicule-à-véhicule ;
déclencher une mise à l'arrêt d'un émetteur (101, 104) des abonnés voisins si le message réceptionné ne correspond pas à la règle déterminée, une instruction de mise à l'arrêt étant transmise à l'émetteur pour le déclenchement de la mise à l'arrêt ; vérifier les instructions de mise à l'arrêt réceptionnées par rapport à un modèle ;
désactiver l'émetteur (101) des abonnés voisins, dès que dans une période déterminée, des instructions de mise à l'arrêt sont réceptionnées par un nombre minium d'autres véhicules.

9. Élément de programme qui lorsqu'il est exécuté sur un processeur d'un système de communication pour la communication de véhicule-à-véhicule, instruit le processeur à réaliser les étapes selon la revendication 8.

10. Support lisible par ordinateur sur lequel est mémorisé un élément de programme, qui lorsqu'il est exécuté sur un processeur d'un système de communication pour la communication de véhicule-à-véhicule, instruit le processeur à réaliser les étapes selon la revendication 8.
